# EUROPEAN PATENT APPLICATION

(11) **EP 4 672 456 A1**
(43) Date of publication of application: **31.12.2025**
(21) Application number: 25154039.9
(22) Date of filing: 27.01.2025
(51) Int. Cl.: H01M 50/209, H01M 50/242, H01M 50/249, H01M 50/258, H01M 50/289, H01M 50/293

(54) **BATTERY PACK, BATTERY PACK POTTING ADHESIVE METHOD, AND VEHICLE**

(30) Priority: 28.06.2024 CN 202410869376
(71) Applicant: Xiaomi EV Technology Co., Ltd., 100176 Beijing (CN)
(72) Inventor: ZHANG, Shangfu, Beijing, 100176 (CN)
(74) Representative: Stöckeler, Ferdinand

(57) **Abstract**

A battery pack includes a battery pack case (1), a battery module (2), a blocking structure (3) and a filling adhesive (4). The battery pack case (1) defines a battery cavity (10), the battery module (2) is positioned in the battery cavity (10), and the battery module (2) is spaced apart from at least part of an inner wall of the battery cavity (10) to define a filling space. The blocking structure (3) has a first side connected to the outer wall of the battery module (2) and a second side abutting against an inner wall of the battery pack case (1), and is configured to divide the filling space into a plurality of separate filling compartments. The filling adhesive (4) is filled in the plurality of filling compartments, to connect the battery module (2) to the inner wall of the battery pack case (1).

## Description

### TECHNICAL FIELD

The present invention relates to the field of battery pack technologies, and more particularly to a battery pack, a battery pack potting adhesive method, and a vehicle.

### BACKGROUND

Battery packs are often used in new energy vehicles, which typically include a case and a battery module. The battery pack case acts as a carrier of the battery module, and plays a key role in the safe operation and protection of the battery module.

### SUMMARY

In order to overcome the problems existing in the related art, the present invention provides a battery pack, a battery pack potting adhesive method, and a vehicle, to solve the technical problem existing in the related art.

The invention is set out in the appended set of claims.

According to a first aspect of embodiments of the present invention, there is provided a battery pack, including:
a battery pack case defining a battery cavity;
a battery module provided in the battery cavity, in which the battery module is spaced apart from at least part of an inner wall of the battery cavity to define a filling space;
a blocking structure having a first side connected to an outer wall of the battery module and a second side abutting against an inner wall of the battery pack case, and configured to divide the filling space into a plurality of separate filling compartments; and
a filling adhesive filled in the plurality of filling compartments, to connect the battery module to the inner wall of the battery pack case.

Optionally, at least two of the plurality of filling compartments have different volumes.

Optionally, the filling adhesive comprises filling adhesives of different foaming rates, the filling compartments of different volumes are filled with the filling adhesives of different foaming rates, and the foaming rate of the filling adhesive in the filling compartment with a larger volume is greater than the foaming rate of the filling adhesive in the filling compartment with a smaller volume.

Optionally, the plurality of filling compartments includes at least one first filling compartment and at least one second filling compartment, and the first filling compartment has a volume greater than a volume of the second filling compartment; and
the blocking structure comprises a plurality of side blocking ribs, each side blocking rib has a first side connected to an outer side wall of the battery module and a second side abutting against an inner side wall of the battery pack case; the plurality of side blocking ribs are spaced apart from each other along a circumferential direction of the outer side wall of the battery module to divide a space between the outer side wall of the battery module and the inner side wall of the battery pack case into the at least one first filling compartment and the at least one second filling compartment.

Optionally, the plurality of filling compartment further includes a third filling compartment; and
the blocking structure further includes an upper blocking rib provided at at least part of an upper peripheral edge of the battery module, the upper blocking rib protrudes from an upper surface of the battery module and abuts against an inner wall of an upper cover of the battery pack case, to define the third filling compartment between the battery module and the upper cover.

Optionally, the upper blocking rib is connected to the plurality of side blocking ribs.

Optionally, the third filling compartment has a volume less than the volume of the second filling compartment;
the filling adhesive includes a first filling adhesive, a second filling adhesive, and a third filling adhesive, the first filling adhesive is filled in the first filling compartment, the second filling adhesive is filled in the second filling compartment, and the third filling adhesive is filled in the third filling compartment; and
the first filling adhesive, the second filling adhesive, and the third filling adhesive are foaming adhesives, a foaming rate of the first filling adhesive is greater than a foaming rate of the second filling adhesive, and the foaming rate of the second filling adhesive is greater than a foaming rate of the third filling adhesive.

Optionally, two sides of the battery module in a first direction are each provided with the first filling compartment, two sides of the battery module in a second direction are each provided with the second filling compartment, and the first direction intersects the second direction.

Optionally, the blocking structure includes an elastic sealing strip adhered to the outer peripheral edge of the battery module.

According to a second aspect of embodiments of the present invention, there is provided a battery pack potting adhesive method, applied to the battery pack, including:
providing the battery module in a case body of the battery pack case;
connecting the blocking structure to an outer wall of the battery module;
filling the filling adhesive in the plurality of filling compartments; and
providing an upper cover of the battery pack case in a blocking manner at an opening of the case body.

Optionally, the plurality of filling compartments includes at least one first filling compartment and at least one second filling compartment, and the first filling compartment has a volume greater than a volume of the second filling compartment; and
filling the filling adhesive in the plurality of filling compartments includes:
calculating a first amount of adhesive required to fill the first filling compartment according to the volume of the first filling compartment;
calculating a second amount of adhesive required to fill the second filling compartment according to the volume of the second filling compartment; and
filling the filling adhesive of the first amount of adhesive in the first filling adhesive, waiting for a first length of time, and filling the filling adhesive of the second amount of adhesive in the second filling adhesive.

According to a third aspect of embodiments of the present invention, there is provided a vehicle; and the vehicle includes the battery pack.

The technical solution provided by embodiments of the present invention may include following beneficial effects: first, the battery pack case defines the battery cavity for accommodating the battery module, and the battery pack case can effectively protect the battery module. Secondly, by providing the blocking structure having the first side connected to the outer wall of the battery module and the second side abutting against the inner wall of the battery pack case, the filling space can be divided into the plurality of separate filling compartments; and by providing the plurality of separate filling compartments, an operator may fill the filling adhesive one by one in the plurality of separate filling compartments, avoiding filling the filling space inside the battery pack case with the filling adhesive in a monolithic manner, thereby avoiding the problem of non-uniform filling and improving the uniformity of filling of the filling adhesive.

It should be understood that, the forgoing general description and the detailed description hereinafter are only illustrative and explanatory, and cannot limit the present invention.

### BRIEF DESCRIPTION OF THE DRAWINGS

The accompanying drawings herein are incorporated into the specification and constitute a part of the specification. These accompanying drawings illustrate embodiments conform to the present invention and are used to explain the principles of the present invention together with the specification.
FIG. 1 is a schematic diagram of an exploded structure of a battery pack illustrated in an embodiment of the present invention.
FIG. 2 is a schematic diagram of a three-dimensional structure of a battery pack illustrated in an embodiment of the present invention.
FIG. 3 is a schematic diagram of a partial structure of a battery pack illustrated in an embodiment of the present invention.
FIG. 4 is a top view of a battery pack illustrated in an embodiment of the present invention.
FIG. 5 is a sectional view at line B-B in FIG. 3.
FIG. 6 is a partially enlarged view of a part N in FIG. 4.
FIG. 7 is a sectional view at line D-D in FIG. 3.
FIG. 8 is a partially enlarged view of a part M in FIG. 6.
FIG. 9 is a flow diagram of a battery pack potting adhesive method illustrated in an embodiment of the present invention.

### Reference numerals:

1. battery pack case; 10. battery cavity; 101. filling compartment; 1011. third filling compartment; 1013. first filling compartment; 1014. second filling compartment; 11. case body; 110. opening; 12. upper cover; 13. first inner side face; 14. second inner side face;
2. battery module; 21. first outer side face; 22. second outer side face;
3. blocking structure; 31. upper blocking rib; 32. side blocking rib;
4. filling adhesive; 41. first filling adhesive; 42. second filling adhesive; 43. third filling adhesive;

A. first direction; B. second direction.

### DETAILED DESCRIPTION

Illustrative embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the present invention. On the contrary, they are merely examples of a device and a method consistent with some aspects of the present invention, as elaborated in the appended claims.

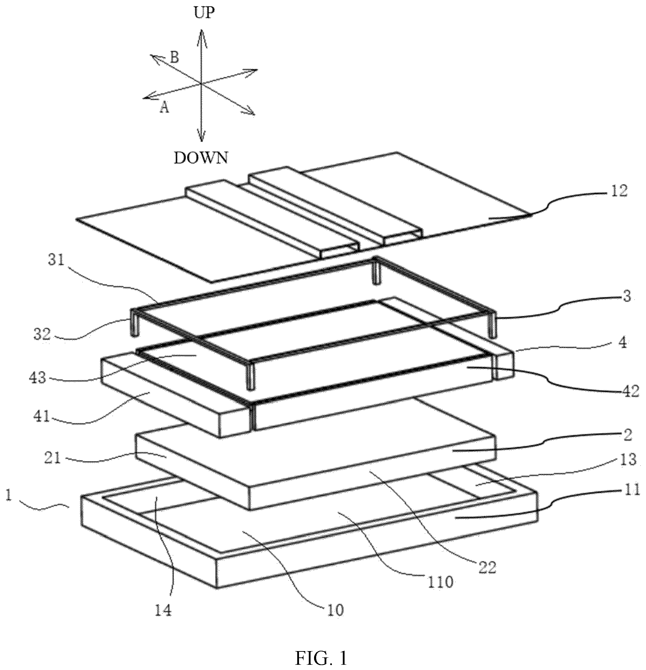

In the present invention, in the absence of any indication to the contrary, the use of orientation words such as "upper and lower" refers to the concept of a thickness direction of the battery pack of the present invention, with the upper side referring to a side of an upper cover of the battery pack and a lower side referring to a side of a bottom of a case body of the battery pack; when installing in practice, either the "upper side" of the battery pack has the same direction as the upper side of the vehicle in normal use, and the "lower side" of the battery pack has the same direction as the lower side of the vehicle in normal use; or the "upper side" of the battery pack may be in the opposite direction to the upper side of the vehicle in normal use, and the "lower side" of the battery pack may be in the opposite direction to the lower side of the vehicle in normal use. In other words, the battery pack, when mounted on the vehicle, can be either front-mounted or reverse-mounted, and additionally can be side-mounted, which is not limited by the present invention herein. Specific reference can be made to FIG. 1; the use of orientation words such as "first direction, second direction" can also refer to FIG. 1; the use of orientation terms such as "inner, outer" refers to an interior and exterior of the specific structural contour, and the use of terms such as "first, second" are used only to distinguish one element from another and are not sequential or significant.

In the related art, in order to improve the stability and strength of the battery module provided in the case, the case is often filled or potted with an adhesive in a monolithic manner, which is prone to the problem of non-uniform adhesive potting.

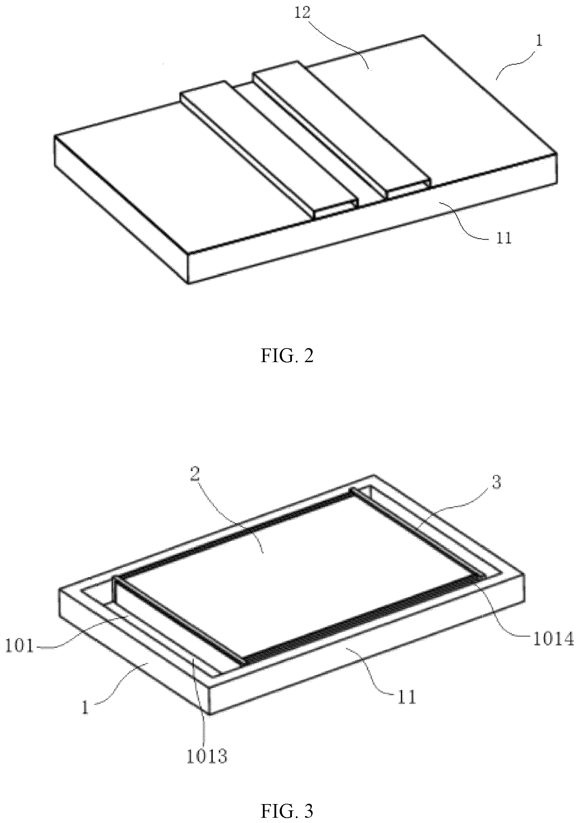

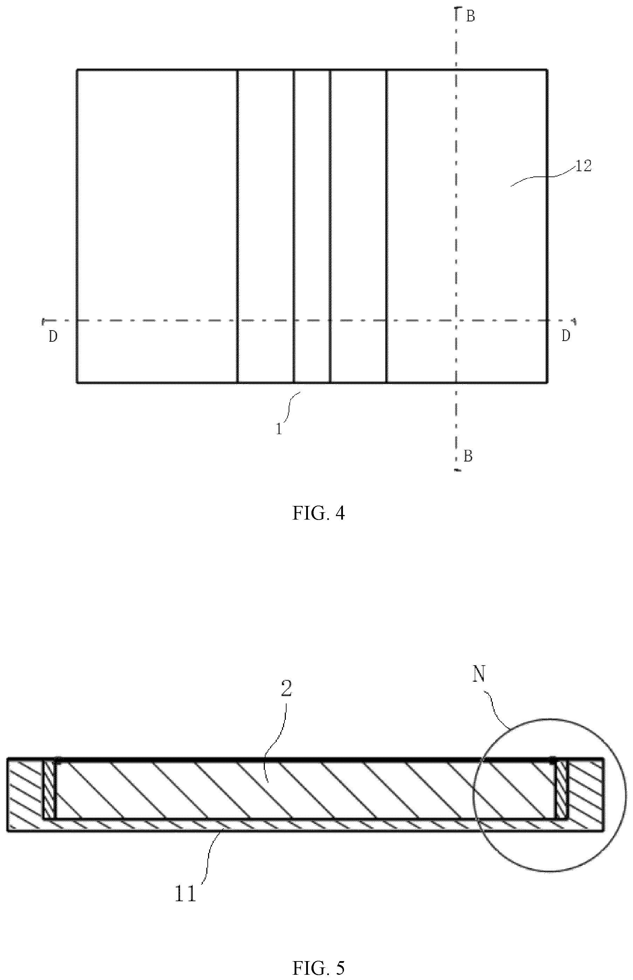

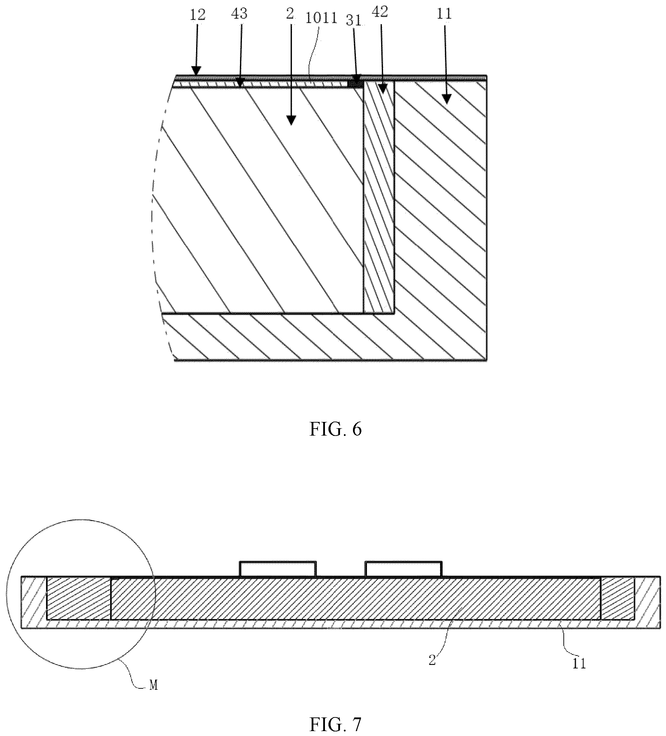

As illustrated in FIGS. 1 to 8, the present invention provides a battery pack, and the battery pack includes a battery pack case 1, a battery module 2, a blocking structure 3 and a filling adhesive 4. The battery pack case 1 defines a battery cavity 10, the battery module 2 is provided in the battery cavity 10, and the battery module 2 is spaced apart from at least part of an inner wall of the battery cavity 10 to define a filling space. The blocking structure 3 has a first side connected to an outer peripheral edge of the battery module 2 and a second side abutting against an inner wall of the battery pack case 1, and can divide the filling space into a plurality of filling compartments 101. The filling adhesive 4 is filled in the plurality of filling compartments 101, to connect the battery module 2 to the inner wall of the battery pack case 1.

It is to be clarified that the battery module 2 described above mainly is comprised of a plurality of battery cells stacked together and used as a power supply body of the battery pack. For example, the battery module 2 of the present invention may include a module housing and a plurality of battery cells, the plurality of battery cells are stacked and provided within the module housing, the module housing can effectively protect the plurality of battery cells, and the filing adhesive 4 of the present invention may not be provided within the module housing. Alternatively, the battery module 2 of the present invention may be provided with no module housing, the plurality of battery cells are stacked to form the battery module 2, and the filling adhesive 4 of the present invention may be filled in the gaps between the battery cells.

In the above-described technical solution, first, the battery pack case 1 defines the battery cavity 10 for accommodating the battery module 2, and the battery pack case 1 can effectively protect the battery module 2. Secondly, by providing the blocking structure 3 having the first side connected to the outer wall of the battery module 2 and the second side abutting against the inner wall of the battery pack case 1, the filling space can be divided into the plurality of separate filling compartments 101; and by providing the plurality of separate filling compartments 101, an operator may fill the filling adhesive 4 one by one in the plurality of separate filling compartments 101, avoiding filling the filling space inside the battery pack case 1 with the filling adhesive 4 in a monolithic manner, thereby avoiding the problem of non-uniform filling and improving the uniformity of filling of the filling adhesive 4.

Optionally, at least two of the above-described filling compartments 101 have different volumes. That is, the above-described blocking structure 3 can divide the filling space into filling compartments 101 with different volumes. For the filling compartments 101 of different volumes, the filling adhesive 4 of different filling volumes can be provided, the filling adhesive 4 of different foaming rates can be provided, or different time to be foamed can be provided, so that the filling of the filling adhesive 4 can be finely controlled according to the volume of the respective filling compartment101, and uniformity of the filling of different compartments can be realized.

In an implementation, as illustrated in FIGS. 1 to 3, the plurality of filling compartments 101 includes at least one first filling compartment 1013 and at least one second filling compartment 1014, and a volume of the first filling compartment 1013 is greater than a volume of the second filling compartment 1014.

The blocking structure 3 includes a plurality of side blocking ribs 32, a first side of the side blocking rib 32 is connected to an outer side wall of the battery module 2, and a second side of the side blocking rib 32 abuts against an inner side wall of the battery pack case 1; the plurality of side blocking ribs 32 are spaced apart from each other along a circumferential direction of the outer side wall of the battery module 2, to divide a space between the outer side wall of the battery module 2 and the inner side wall of the battery pack case 1 into the at least one first filling compartment 1013 and the at least one second filling compartment 1014.

In this implementation, for the first filling compartment 1013 having a larger volume, the filling adhesive 4 with a larger foaming rate can be used, and the foam can be the more fluffy, so that the usage amount of filling adhesive 4 can be effectively reduced to achieve effective filling to enhance the pressure resistance and stiffness, while also being able to the reduce cost.

For the second filling compartment 1014 having a smaller volume, the filling adhesive 4 with a lower foaming rate can be used, which can make the adhesive flow sufficiently into the compartment with a narrow space, and also facilitate the effective control of the usage amount of the filling adhesive 4, thereby improving the high voltage creepage distance and improving the pressure resistance of the whole pack and the stiffness of the whole pack, and improving the adhesive potting effect.

In addition, the present invention does not limit the number of the first filling compartments 1013 and the second filling compartments 1014; furthermore, the present invention does not limit the arrangement manner of the first filling compartments 1013 and the second filling compartments 1014.

Optionally, the above-described side blocking rib 32 is provided on the outer side wall of the battery module 2 extending in an up-and-down direction; an upper end of the side blocking rib 32 can abut against an inner surface of the upper cover 12 of the battery pack case 1, a lower end of the side blocking rib 32 can abut against an inner bottom wall of the case body 11 of the battery pack case 1, and a side face of the side blocking rib 32 can abut against the inner side wall of the case body 11, to divide the above-described first filling compartment 1013 and the second filling compartment 1014.

In an implementation, as illustrated in FIGS. 1 and 5-8, the plurality of filling compartments 101 may also include a third filling compartment 1011. The blocking structure 3 further includes an upper blocking rib 31 connected to the plurality of side blocking ribs 32, the upper blocking rib 31 is provided at at least part of an upper peripheral edge of the battery module 2, the upper blocking rib 31 protrudes from an upper surface of the battery module 2 and abuts against an inner wall of an upper cover 12 of the battery pack case 1, to define the third filling compartment 1011 between the battery module 2 and the upper cover 12.

The battery pack case 1 may include a case body 11 and an upper cover 12, an upper end of the case body 11 defines an opening 110, and the upper cover 12 is provided at the opening 110 in a blocking manner to define the battery cavity 10.

In this implementation, first, for the battery module 2, either a module housing (not illustrated) may be included or no module housing may be provided. For the battery module 2 including the module housing, an interior of the battery module 2 does not need to be filled with the filling adhesive 4. For the battery module 2 including no module housing, the third filling compartment 1011 described above may include two portions in communication with each other, one portion being a gap between the battery cells of the battery module 2, and the other portion being a space defined between the upper surface of the battery module 2 and the upper cover 12.

Secondly, the upper blocking rib 31 may be arranged in such a way that it is either completely enclosed around the upper peripheral edge of the battery module 2, or it may be provided on a part of the upper peripheral edge of the battery module 2. For example, the upper blocking rib 31 may be provided on both edges of the upper peripheral edge of the battery module 2 opposite each other along a first direction A. Alternatively, the upper blocking rib 31 may be provided on both edges of the upper peripheral edge of the battery module 2 opposite each other along a second direction B. The present invention does not limit the specific arrangement manner of the upper blocking rib 31.

In addition, by providing the upper blocking rib 31, the space between the upper surface of the battery module 2 and the upper cover 12 can be spaced from other spaces, so that the space between the upper surface of the battery module 2 and the upper cover 12 can perform adhesive potting independently, and the narrow space can be effectively filled, thereby improving the high-voltage creepage distance and improving the pressure resistance of the whole pack and the stiffness of the whole pack, and improving the effect of the adhesive potting.

In other implementations, as illustrated in FIGS. 1 and 3-8, the third filling compartment 1011 has a volume less than the volume of the second filling compartment 1014; the filling adhesive 4 includes a first filling adhesive 41, a second filling adhesive 42, and a third filling adhesive 43, the first filling adhesive 41 is filled in the first filling compartment 1013, the second filling compartment 42 is filled in the second filling compartment 1014, and the third filling adhesive 43 is filled in the third filling compartment 1011; and the first filling adhesive 41, the second filling adhesive 42, and the third filling adhesive 43 are foaming adhesives, a foaming rate of the first filling adhesive 41 is greater than a foaming rate of the second filling adhesive 42, and the foaming rate of the second filling adhesive 42 is greater than a foaming rate of the third filling adhesive 43.

In this embodiment, for the first filling compartment 1013 having a larger volume, the first filling adhesive 41 with a larger foaming rate is used, and the foam is more fluffy, so that the usage amount of the first filling adhesive 41 can be effectively reduced to realize effective filling to enhance the pressure resistance and stiffness while also being able to reduce the cost.

For the second filling compartment 1014 having a smaller volume, the use of the second filling adhesive 42 with a lower foaming rate allows the adhesive to flow sufficiently into the compartment with a narrow space, and also facilitates the effective control of the usage amount of the second filling adhesive 42.

In addition, for the third filling compartment 1011 having the smallest volume, the use of the third filling adhesive 43 with the lowest foaming rate allows the space between the upper surface of the battery module 2 and the upper cover 12 to perform sufficient adhesive potting or filling, and enhance the strength of the connection between the upper surface of the battery module 2 and the upper cover 12.

In an implementation, as illustrated in FIGS. 1 to 3, the battery module 2 includes a rectangular module, and four side blocking ribs 32 are provided in one-to-one correspondence with four side edges of the rectangular module to divide two first filling compartments 1013 and two second filling compartments 1014. The two first filling compartments 1013 are located on both sides of the rectangular module along the first direction A, and the two second filling compartments 1014 are located on both sides of the rectangular module along the second direction B. The first direction A and the second direction B are provided in a horizontal plane and are perpendicular to each other. However, the present invention does not limit the specific shape of the battery module 2.

Optionally, as illustrated in FIGS. 1 to 3, the battery pack case 1 includes a rectangular case. The rectangular case includes two first inner side faces 13 spaced apart and opposite to each other along the first direction A, and two second inner side faces 14 spaced apart and opposite to each other along the second direction B. The rectangular module includes two first outer side faces 21 facing away from each other along the first direction A, and two second outer side faces 22 facing away from each other along the second direction B. The first outer side face 21 is spaced apart from the corresponding first inner side face 13 along the first direction A to define the first filling compartment 1013, and the second outer side face 22 is spaced apart from the corresponding second inner side face 14 along the second direction B to define the second filling compartment 1014.

In this implementation, for example, the first inner side face 13 of the battery pack case 1 may be a short edge side face, the second inner side face 14 may be a long edge side face, the first outer side face 21 of the battery module 2 may be a short edge side face, and the second outer side face 22 may be a long edge side face. The first outer side face 21 and the corresponding first inner side face 13 are spaced apart along the first direction A to define the first filling compartment 1013 with more volume, and the second outer side face 22 and the corresponding second inner side face 14 are spaced apart along the second direction B to define the second filling compartment 1014 with less and narrower space. However, the present invention does not limit the shape of the battery pack case 1.

In another implementation, the volume of the third filling compartment 1011 is not less than the volume of the second filling compartment 1014 and not greater than the volume of the first filling compartment 1013, and the above-described second filling adhesive 42 is provided in the third filling compartment 1011.

Optionally, the blocking structure 3 includes an elastic sealing strip, and the elastic sealing strip is adhered to an outer peripheral edge of the battery module 2. For example, the elastic sealing strip can be EPDM (Ethylene Propylene Diene Monomer), PU (polyurethane), foamed silicone, etc., with good compression performance and ease to fill, and in addition the elastic sealing strip has a certain degree of toughness to facilitate adhering and assembly. For example, the elastic sealing strip is pre-fixed with a single-sided adhesive and compressed to achieve adhesive plugging. The plugging strip has a compression width: it is recommended to be controlled at 3mm-15mm. Considering deviation of an adhered position of the plugging strip, it is recommended an effective compression width of 5mm ~ 10mm, height of 4mm ~ 10mm. The specific size settings can be set according to the hardness of the selected elastic sealing strip, the softer the selected width and thickness the greater.

For the above mentioned upper cover 12 of the battery pack case 1 can be sheet metal, liquid cooling plate, composite material and other structures, which is limited by the present invention. The case body 11 of the battery pack case 1 is a load-bearing fixed mounting structure, which can be an aluminum welded structure, a cast aluminum structure, a sheet metal stamping member or an injection molding member, which is not limited by the present invention.

In addition, for the potting mode of the filling adhesive 4, it can be either a half-potting mode or a full-potting mode, and different adhesives (preferably the same system to avoid chemical reactions) can be used for different compartments or the same adhesive can be used for different compartments, which is not limited by the present invention.

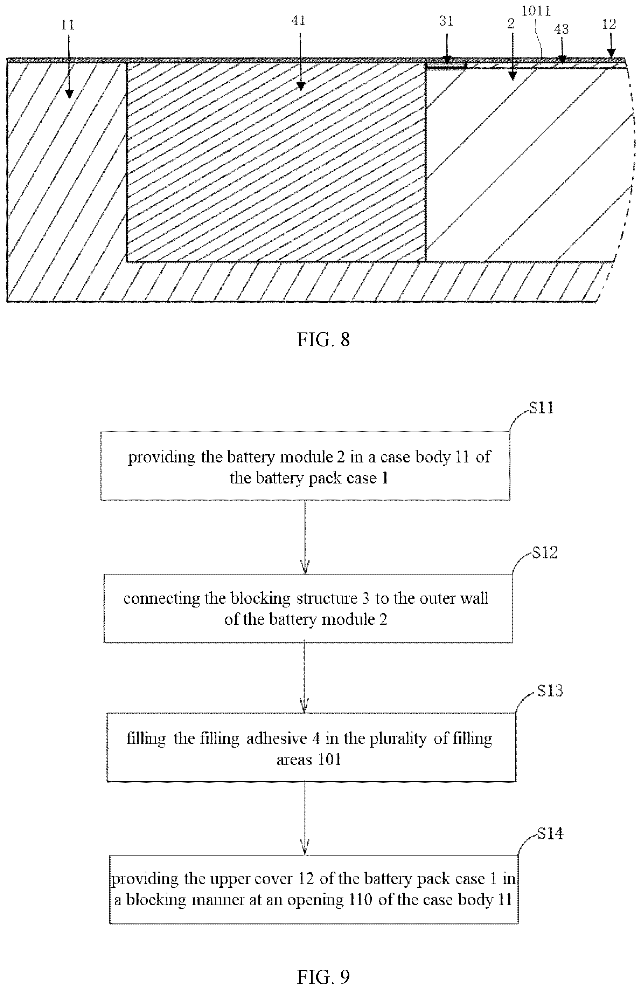

As illustrated in FIG. 9, the present invention also provides a battery pack potting adhesive method, applied to the battery pack described above, including:
in S 11, the battery module 2 is provided in the case body 11 of the battery pack case 1;
in S12, the blocking structure 3 is connected to the outer wall of the battery module 2;
in S13, the filling adhesive 4 is filled in the plurality of filling compartments 101; and
in S14, the upper cover 12 of the battery pack case 1 is provided in a blocking manner at an opening 110 of the case body 11.

In the above-described technical solution, by providing the blocking structure 3 having the first side connected to the outer wall of the battery module 2 and the second side abuts against the inner wall of the battery pack case 1, the filling space can be divided into the plurality of separate filling compartments 101; and by providing the plurality of separate filling compartments 101, an operator may fill the filling adhesive 4 one by one in the plurality of separate filling compartments 101, avoiding filling the filling space inside the battery pack case 1 with the filling adhesive 4 in a monolithic manner, thereby avoiding the problem of non-uniform filling and improving the uniformity of filling of the filling adhesive 4.

In some embodiments, filling the filling adhesive 4 in the plurality of filling compartments 101 may include: calculating a first amount of adhesive required to fill the first filling compartment 1013 according to the volume of the first filling compartment 1013; calculating a second amount of adhesive required to fill the second filling compartment 1014 according to the volume of the second filling compartment 1014; and filling the filling adhesive 4 of the first amount of adhesive in the first filling adhesive 1013, waiting for a first length of time, and filling the filling adhesive 4 of the second amount of adhesive in the second filling adhesive 1014. Thus, it is possible to accurately control and adjust the adhesive potting of each filling compartment 101 to avoid poor adhesive potting. Alternatively, in other implementations, the plurality of filling compartments 101 may perform the adhesive potting simultaneously to enhance the efficiency of the adhesive potting, which is not limited by the present invention.

The present invention further provides a vehicle, and the vehicle includes the above-described battery pack.

Other embodiments of the present invention will readily occur to a person skilled in the art upon consideration of the specification and practice of the present invention. The specification and embodiments are to be regarded as illustrative only, with the true scope of the disclosure being indicated by the following claims.

It should be understood that the present invention is not limited to the precise structures described above and illustrated in the accompanying drawings, and that various modifications and changes may be made without departing from the scope thereof. The scope of the present invention is limited only by the appended claims.

## Claims

1. A battery pack, comprising:
a battery pack case (1) defining a battery cavity (10);
a battery module (2) positioned in the battery cavity (10), wherein the battery module (2) is spaced apart from at least part of an inner wall of the battery cavity (10) to define a filling space;
a blocking structure (3) having a first side connected to an outer wall of the battery module (2) and a second side abutting against an inner wall of the battery pack case (1), and configured to divide the filling space into a plurality of separate filling compartments (101); and
a filling adhesive (4) filled in the plurality of filling compartments (101) to connect the battery module (2) to the inner wall of the battery pack case (1).

2. The battery pack according to claim 1, wherein at least two of the plurality of filling compartments (101) have different volumes.

3. The battery pack according to claim 2, wherein the filling adhesive (4) comprises filling adhesives (4) of different foaming rates, wherein the filling compartments (101) of different volumes are filled with the filling adhesives (4) of different foaming rates, and the foaming rate of the filling adhesive (4) in the filling compartment (101) with a larger volume is greater than the foaming rate of the filling adhesive (4) in the filling compartment (101) with a smaller volume.

4. The battery pack according to any one of claims 1-3, wherein the plurality of filling compartments (101) comprises at least one first filling compartment (1013) and at least one second filling compartment (1014), and the first filling compartment (1013) has a volume greater than a volume of the second filling compartment (1014); and
the blocking structure (3) comprises a plurality of side blocking ribs (32), each side blocking rib (32) has a first side connected to an outer side wall of the battery module (2) and a second side abutting against an inner side wall of the battery pack case (1); and the plurality of side blocking ribs (32) are spaced apart from each other along a circumferential direction of the outer side wall of the battery module (2) to divide a space between the outer side wall of the battery module (2) and the inner side wall of the battery pack case (1) into the at least one first filling compartment (1013) and the at least one second filling compartment (1014).

5. The battery pack according to claim 4, wherein the plurality of filling compartments (101) further comprises a third filling compartment (1011); and
the blocking structure (3) further comprises an upper blocking rib (31) provided at at least part of an upper peripheral edge of the battery module (2), the upper blocking rib (31) protrudes from an upper surface of the battery module (2) and abuts against an inner wall of an upper cover (12) of the battery pack case (1), to define the third filling compartment (1011) between the battery module (2) and the upper cover (12).

6. The battery pack according to claim 5, wherein the upper blocking rib (31) is connected to the plurality of side blocking ribs (32).

7. The battery pack according to claim 5 or 6, wherein
the third filling compartment (1011) has a volume less than the volume of the second filling compartment (1014);
the filling adhesive (4) comprises a first filling adhesive (41), a second filling adhesive (42), and a third filling adhesive (43), the first filling adhesive (41) is filled in the first filling compartment (1013), the second filling adhesive (42) is filled in the second filling compartment (1014), and the third filling adhesive (43) is filled in the third filling compartment (1011); and
the first filling adhesive (41), the second filling adhesive (42), and the third filling adhesive (43) are foaming adhesives, a foaming rate of the first filling adhesive (41) is greater than a foaming rate of the second filling adhesive (42), and the foaming rate of the second filling adhesive (42) is greater than a foaming rate of the third filling adhesive (43).

8. The battery pack according to any one of claims 4 to 7, wherein the side blocking rib (32) is provided on the outer side wall of the battery module (2) extending in an up-and-down direction; an upper end of the side blocking rib (32) abuts against an inner surface of the upper cover (12) of the battery pack case (1), a lower end of the side blocking rib (32) abuts against an inner bottom wall of a case body (11) of the battery pack case (1), and a side face of the side blocking rib (32) abuts against the inner side wall of the case body (11), to divide the first filling compartment (1013) and the second filling compartment (1014).

9. The battery pack according to any one of claims 4 to 8, wherein two sides of the battery module (2) in a first direction (A) are each provided with the first filling compartment (1013), two sides of the battery module (2) in a second direction (B) are each provided with the second filling compartment (1014), and the first direction (A) intersects the second direction (B)

10. The battery pack according to claim 9, wherein the first direction (A) and the second direction (B) are provided in a horizontal plane and are perpendicular to each other.

11. The battery pack according to any one of claims 1 to 10, wherein the blocking structure (3) comprises an elastic sealing strip adhered to the outer peripheral edge of the battery module (2).

12. The battery pack according to any one of claims 1 to 11, wherein the battery pack case (1) comprises a case body (11) and an upper cover (12), an upper end of the case body (11) defines an opening (110), and the upper cover (12) is provided at the opening (110) in a blocking manner to define the battery cavity (10).

13. A battery pack potting adhesive method, applied to a battery pack according to any one of claims 1 to 12, comprising:
providing (S11) the battery module (2) in a case body (11) of the battery pack case (1);
connecting (S12) the blocking structure (3) to the outer wall of the battery module (2);
filling (S13) the filling adhesive (4) in the plurality of filling compartments (101); and
providing (S14) the upper cover (12) of the battery pack case (1) in a blocking manner at an opening of the case body (11).

14. The method according to claim 13, wherein the plurality of filling compartments (101) comprises at least one first filling compartment (1013) and at least one second filling compartment (1014), and the first filling compartment (1013) has a volume greater than a volume of the second filling compartment (1014); and
filling the filling adhesive (4) in the plurality of filling compartments (101) comprises:
calculating a first amount of adhesive required to fill the first filling compartment (1013) according to the volume of the first filling compartment (1013);
calculating a second amount of adhesive required to fill the second filling compartment (1014) according to the volume of the second filling compartment (1014); and
filling the filling adhesive (4) of the first amount of adhesive in the first filling compartment (1013), waiting for a first length of time, and filling the filling adhesive of the second amount of adhesive in the second filling compartment (1014).

15. A vehicle, comprising a battery pack according to any one of claims 1 to 12.
